(19) Europäisches Patentamt
European Patent Office
Office européen des brevets

(11) **EP 3 890 166 A1**

(12) # EUROPEAN PATENT APPLICATION
published in accordance with Art. 153(4) EPC

(43) Date of publication:
06.10.2021 Bulletin 2021/40

(21) Application number: 19889028.7

(22) Date of filing: 09.10.2019

(51) Int Cl.:
*H02K 7/116* (2006.01)

(86) International application number:
PCT/JP2019/039890

(87) International publication number:
WO 2020/110472 (04.06.2020 Gazette 2020/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.11.2018 JP 2018222696

(71) Applicant: Panasonic Intellectual Property
Management Co., Ltd.
Osaka-shi, Osaka 540-6207 (JP)

(72) Inventor: ABE, Hideaki
Osaka-shi, Osaka 540-6207 (JP)

(74) Representative: Appelt, Christian W.
Boehmert & Boehmert
Anwaltspartnerschaft mbB
Pettenkoferstrasse 22
80336 München (DE)

(54) **ELECTROMECHANICAL DEVICE**

(57) An electromechanical apparatus is provided with: a gear mechanism transmitting rotation of its input shaft; a generator generating electric power at its output terminals in response to rotation transmitted by the gear mechanism; and a pendulum connected to the input shaft of the gear mechanism. The electromechanical apparatus is further provided with a frame located at a fixed position relative to the gear mechanism and the generator. The frame is formed so as to at least partially cover the pendulum and a trajectory of the pendulum when the pendulum swings about the input shaft of the gear mechanism at least within a predetermined angular range. The pendulum swings about the input shaft of the gear mechanism in response to shaking of a whole of the electromechanical apparatus, and the generator generates positive and negative voltages at the output terminals in response to swinging of the pendulum.

FIG. 1

EP 3 890 166 A1

## Description

### TECHNICAL FIELD

The present disclosure relates to an electromechanical apparatus provided with a generator.

### BACKGROUND ART

In recent years, in consideration of fossil fuel depletion and global warming prevention, utilization of natural energy, and various kinds of ambient energy has been actively promoted. As utilization of the natural energy, for example, it is known to generate electric power using a solar cell or a wind power generator. In addition, as utilization of the ambient energy, for example, it is known to generate electric power using energy obtained from daily activities of a user (human-powered generation), piezoelectric energy (vibration power generation), energy of electromagnetic waves such as broadcast waves, or the like. To harvest and use the ambient energy draws attention as "energy harvesting".

For example, Patent Document 1 discloses that a power generating device provided on a hinge of a hinged door is used to generate power by opening and closing actions of the door.

### CITATION LIST

### PATENT DOCUMENTS

PATENT DOCUMENT 1: Japanese Patent No. JP 6083621 B1

### SUMMARY OF INVENTION

### TECHNICAL PROBLEM

However, the conventional energy harvesting techniques and their application products have problems, such as a limited amount of energy that can be extracted, and limitations on the time of day or time length in which energy can be extracted. Specifically, solar cells can generate electric power only in outdoor and daytime, and further, the generated electric power decreases depending on the weather. Wind power generators can generate electric power also only in outdoor, and the generated electric power decreases depending on the wind speed. In addition, vibration power generation using piezoelectric energy can continuously extract electrical energy from vibration energy of mechanical apparatuses and the like, but can obtain only small electric power, and therefore, it is difficult to store large electric energy enough to operate any apparatus. Furthermore, although human power generation using a generator can extract relatively large electric power, a user has to consciously rotate a rotating lever of the generator tens to hundreds of times, and therefore, the user is bound for a long period of time, and results in the fatigue of the user. In addition, human power generation using a power generating device incorporated in a door or the like, as disclosed in Patent Document 1, is available only in limited situations. As described above, according to the prior art, there is no practical way of generating electric power, the way being capable of continuously and unconsciously extracting relatively large electric power.

The present disclosure provides an electromechanical apparatus provided with a generator, the electromechanical apparatus being capable of continuously and unconsciously extracting relatively large electric power from daily activities of a user.

### SOLUTION TO PROBLEM

According to an aspect of the present disclosure, an electromechanical apparatus is provided with: a gear mechanism that has an input shaft and transmits rotation of the input shaft; a generator that has output terminals and generates electric power at the output terminals in response to rotation transmitted by the gear mechanism; and a pendulum that is connected to the input shaft of the gear mechanism. The electromechanical apparatus is further provided with a frame located at a fixed position relative to the gear mechanism and the generator. The frame is formed so as to at least partially cover the pendulum and a trajectory of the pendulum when the pendulum swings about the input shaft of the gear mechanism at least within a predetermined angular range. The pendulum swings about the input shaft of the gear mechanism in response to shaking of a whole of the electromechanical apparatus, and the generator generates positive and negative voltages at the output terminals in response to swinging of the pendulum.

### ADVANTAGEOUS EFFECTS OF INVENTION

According to the electromechanical apparatus of the aspect of the present disclosure, it is possible to continuously and unconsciously extract relatively large electric power from daily activities of a user.

### BRIEF DESCRIPTION OF DRAWINGS

Fig. 1 is a front view illustrating a configuration of an electromechanical apparatus 1 according to a first embodiment.
Fig. 2 is a side view illustrating the configuration of the electromechanical apparatus 1 of Fig. 1.
Fig. 3 is a circuit diagram illustrating a configuration of a power converter circuit 15 of Fig. 1.
Fig. 4 is a schematic diagram for explaining how to determine the weight and dimensions of a pendulum 11 of Fig. 1.
Fig. 5 is a graph schematically illustrating temporal variations of an output voltage V1 of a generator 13 when output terminals of the generator 13 of Fig. 4 are electrically open.

Fig. 6 is a graph schematically illustrating temporal variations of the output voltage V1 of the generator 13 of Fig. 4 when the output terminals of the generator 13 are connected to a load device having a load value of 100 Ω.

Fig. 7 is a graph schematically illustrating temporal variations of the output voltage V1 of the generator 13 of Fig. 4 when the output terminals of the generator 13 are connected to a load device having a load value of 200 Ω.

Fig. 8 is a graph schematically illustrating temporal variations of the output voltage V1 of the generator 13 of Fig. 4 when the output terminals of the generator 13 are connected to a load device having a load value of 320 Ω.

Fig. 9 is a graph schematically illustrating temporal variations of the output voltage V1 of the generator 13 of Fig. 4 when the output terminals of the generator 13 are connected to a load device having a load value of 490 Ω.

Fig. 10 is a side view illustrating a configuration of an electromechanical apparatus 1A according to a first modified embodiment of the first embodiment.

Fig. 11 is a diagram illustrating first exemplary use of the electromechanical apparatus 1 of Fig. 1.

Fig. 12 is a diagram illustrating second exemplary use of the electromechanical apparatus 1 of Fig. 1.

Fig. 13 is a diagram illustrating third exemplary use of the electromechanical apparatus 1 of Fig. 1.

Fig. 14 is a diagram illustrating fourth exemplary use in which the electromechanical apparatus 1 of Fig. 1 is used together with a load device 21 that is a lighting device.

Fig. 15 is a diagram illustrating first exemplary use of the electromechanical apparatus 1A of Fig. 10.

Fig. 16 is a diagram illustrating second exemplary use of the electromechanical apparatus 1A of Fig. 10.

Fig. 17 is a diagram illustrating third exemplary use of the electromechanical apparatus 1A of Fig. 10.

Fig. 18 is a diagram illustrating fourth exemplary use of the electromechanical apparatus 1A of Fig. 10.

Fig. 19 is a front view illustrating a configuration of an electromechanical apparatus 1B according to a second modified embodiment of the first embodiment.

Fig. 20 is a front view illustrating a configuration of an electromechanical apparatus 1C according to a third modified embodiment of the first embodiment.

Fig. 21 is a side view illustrating the configuration of the electromechanical apparatus 1C of Fig. 20.

Fig. 22 is a front view illustrating a configuration of an electromechanical apparatus 1D according to a second embodiment.

Fig. 23 is a side view illustrating the configuration of the electromechanical apparatus 1D of Fig. 22.

Fig. 24 is a front view illustrating a configuration of an electromechanical apparatus 1E according to a third embodiment.

Fig. 25 is a side view illustrating the configuration of the electromechanical apparatus 1E of Fig. 24.

Fig. 26 is a front view illustrating a configuration of an electromechanical apparatus IF according to a fourth embodiment.

Fig. 27 is a side view illustrating the configuration of the electromechanical apparatus IF of Fig. 26.

## DESCRIPTION OF EMBODIMENTS

Hereinafter, embodiments of the present disclosure will be described with reference to the drawings. In the drawings, the same reference sign indicates similar components.

[FIRST EMBODIMENT]

[OVERALL CONFIGURATION]

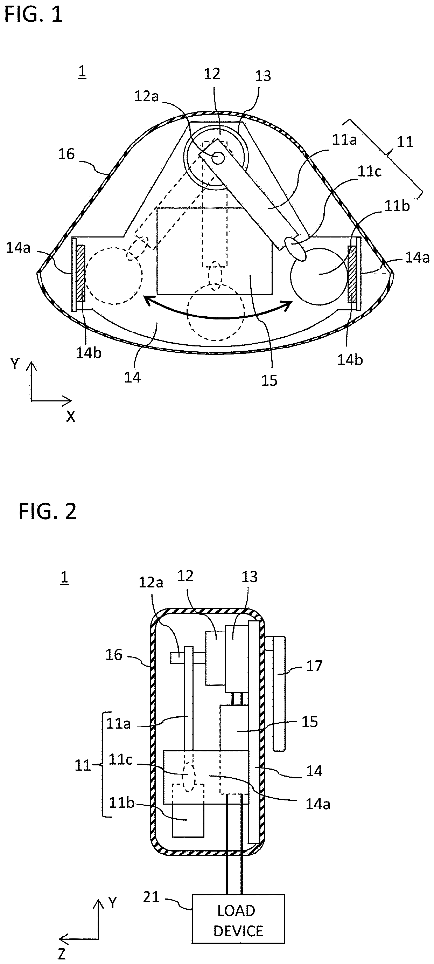

Fig. 1 is a front view illustrating a configuration of an electromechanical apparatus 1 according to a first embodiment. Fig. 2 is a side view illustrating the configuration of the electromechanical apparatus 1 of Fig. 1. The electromechanical apparatus 1 is provided with: a pendulum 11, a gear mechanism 12, a generator 13, a frame 14, a power converter circuit 15, a housing 16, and a fastener 17. The electromechanical apparatus 1 is, for example, a wearable apparatus attached to a body of a user. The electromechanical apparatus 1 generates electric power in response to shaking of the whole of the electromechanical apparatus 1, and supplies the generated electric power to a load device 21.

The pendulum 11 is connected to (i.e., engaged or integrated with) an input shaft 12a (described below) of the gear mechanism 12. The pendulum 11 swings about the input shaft 12a of the gear mechanism 12 at least within a predetermined angular range in response to shaking of the whole of the electromechanical apparatus 1. The torque generated by the pendulum 11 is transmitted to the gear mechanism 12 via the input shaft 12a. The pendulum 11 is provided with, for example, an arm 11a connected to the input shaft 12a of the gear mechanism 12, a bob 11b, and a connecting member 11c connecting the arm 11a and the bob 11b to each other. The bob 11b may be iron, lead, synthetic resin (plastic, etc.), stone, sand, liquid (water, etc.), coins, or the like. The connecting member 11c may fixedly connect the arm 11a and the bob 11b to each other by screwing, bonding, welding, or the like. With this configuration, it is possible to effectively transmit the force acting on the bob 11b, as torque to the gear mechanism 12. The connecting member 11c may include an elastic body, a ring, and the like, and connect the arm 11a and the bob 11b so as to be movable to each other. With this configuration, the force acting on the bob 11b is indirectly transmitted to the arm 11a via the connecting member 11c, and therefore, it is possible to adjust the magnitude of torque, and the time length during which the torque is transmitted. The connecting member 11c can be appropriately configured according to the application of the electromechanical apparatus 1, and according to the load device 21. Alternatively, the pendulum 11 may be integrally formed as a single member.

The gear mechanism 12 has the input shaft 12a to transmit rotation of the input shaft 12a to the generator 13. The gear mechanism 12 may be configured to transmit the rotation of the input shaft 12a to the generator 13 at an increasing gear ratio. The gear mechanism 12 may include a multi-stage planetary gear mechanism. In this case, the gear mechanism having a large increasing gear ratio can be compactly packed in alignment with the input shaft 12a of the generator 13. The gear mechanism 12 may include a spur gear mechanism, or a gear mechanism of other types.

The generator 13 is provided with a stator, a rotor, and a gear fixed to a rotating shaft of the rotor. The rotation transmitted from the gear mechanism 12 is inputted to the generator 13 via the gear. The generator 13 has a pair of output terminals, and generate electric power at the output terminals according to the rotation transmitted by the gear mechanism 12. The generator 13 may be a DC generator or an AC generator.

The gear mechanism 12 and the generator 13 may be integrated with each other.

The operation of the generator and the operation of the motor are reversible to each other. Therefore, instead of using the gear mechanism 12 having a increasing gear ratio, and the generator 13, a motor and a gear mechanism having a decreasing gear ratio may be used. In this case, the gear mechanism transmits rotation of an output shaft to the motor at the increasing gear ratio equal to a reciprocal of the decreasing gear ratio. Then, the motor generates electric power in response to the rotation transmitted by the gear mechanism.

The frame 14 is located at a fixed position relative to the gear mechanism 12 and the generator 13. Here, "a fixed position relative to ..." means that a position fixed directly or indirectly to the gear mechanism 12 and the generator 13 so that the relative position does not vary with respect to the gear mechanism 12 and the generator 13. The frame 14 is formed so as to at least partially cover the pendulum 11 and its trajectory when the pendulum 11 swings about the input shaft 12a of the gear mechanism 12 at least within a predetermined angular range. Therefore, in the example of Figs. 1 and 2, the frame 14 includes one planar portion extending along the XY plane, and two planar portions extending along the YZ plane, and these planar portions partially surround the pendulum 11 and its trajectory. The frame 14 may be made of one planar member that is bent, or may be made of a plurality of members combined together. In addition, in the example of Figs. 1 and 2, the two planar portions of the frame 14 extending along the YZ plane are formed so as to be in contact with the pendulum 11 to limit the angular range in which the pendulum 11 swings about the input shaft 12a of the gear mechanism 12. In the present specification, these planar portions are referred to as "stoppers 14a".

The electromechanical apparatus 1 may be further provided with cushion members 14b provided on at least one of the pendulum 11 and the frame 14, at positions where the pendulum 11 and the frame 14 are contact with each other. In the example of Fig. 1, the cushion members 14b are provided on the stoppers 14a of the frame 14. The cushion members 14b are formed of rubber, cloth, a spring, or the like. By providing the cushion members 14b, the pendulum 11, the gear mechanism 12, and the generator 13 are less likely to be damaged by an excessive load. In addition, it is possible to reduce noise by providing the cushion members 14b. In addition, in a case where a user wears the electromechanical apparatus 1 for use, by providing the cushion member 14b, it is possible to reduce the impact transmitted to the user.

The power converter circuit 15 rectifies and/or stores the electric power generated by the generator 13, for use by the load device 21 at a subsequent stage.

The load device 21 operates with the electric power generated by the generator 13. The load device 21 includes, for example, at least one of a lighting device, a rechargeable battery, a sensor, or a communication device.

In the example of Fig. 1, the housing 16 surrounds the pendulum 11, the gear mechanism 12, the generator 13, the frame 14, and the power converter circuit 15. The power converter circuit 15 may be omitted, may be provided outside the housing 16, or may be integrated into, for example, the load device 21. Figs. 1 and 2 illustrate cutaway views of the housing 16 for illustration purposes.

The fastener 17 is provided to attach the electromechanical apparatus 1 to a movable object. The fastener 17 is fixed to the generator 13, the frame 14, or the housing 16. As used herein, the "movable object" may refer to a living matter such as a human or animal (e.g. a body of a user), or a non-living matter such as a bag, door, window, or vehicle. The electromechanical apparatus 1 is attached to the movable object by the fastener 17 so that the electromechanical apparatus 1 follows the movement of the movable object. The fastener 17 may be configured to be inserted into, for example, a belt, clothes, or the like, or sandwiched therebetween. The fastener 17 may be made of one member, or may be made of a plurality of members including a spring and the like. In addition, the fastener 17 may be a safety pin, a hook-and-loop fastener, or the like that can be attached to clothes, or may be an adhesive tape that can be adhered to clothes or skin. In addition, the fastener 17 may be a belt or a string that can be wrapped around the arm, leg, body, or the like. In addition, the fastener 17 may be a string that can be tied to a shoelace or the like. When the movable object is a non-living matter, the fastener 17 may include a screw.

When the movable object is configured to hold the electromechanical apparatus 1 in a substantially fixed manner, for example, when the electromechanical apparatus 1 is inserted into a pocket of clothes or the like, the fastener 17 may be omitted.

Each component of the electromechanical apparatus 1 may be made from various materials, and may have various operating principles. These materials and operating principles can be combined in arbitrary manners according to applications of the electromechanical apparatus 1, and according to the load device 21.

By attaching the electromechanical apparatus 1 to a movable object, the electromechanical apparatus 1 follows the movement of the movable object and shakes as a whole. Acceleration or deceleration of the movable object generates a force such as inertial force and centrifugal force on the pendulum 11, and these forces displace or shake the pendulum 11 with reference to the position of the pendulum 11 when the movable object is stationary or in uniform linear motion. The force acting when the stationary pendulum 11 starts to move, and the force acting when the moving pendulum 11 stops or moves in the opposite direction are referred to as "inertial force" for convenience purposes. Since many movements of movable objects such as humans or objects involve acceleration and deceleration, it is possible to utilize the inertial force and centrifugal force acting on the bob 11b during the acceleration or deceleration. Even when a small force acts on the bob 11b, it is possible to transmit a large torque to the gear mechanism 12 and the generator 13 via the arm 11a using the principle of leverage. Thus, the pendulum 11 swings about the input shaft 12a of the gear mechanism 12 in response to the shaking of the whole of the electromechanical apparatus 1, and the generator 13 generates positive and negative voltages at the output terminals in response with the swinging of the pendulum 11. The electric power generated by the generator 13 is supplied to the load device 21 via the power converter circuit 15.

Since the electromechanical apparatus 1 is provided with the frame 14 and the housing 16, the pendulum 11 is not contact with clothes of a user, body (e.g., a hand), and/or the like, and therefore, the swinging of the pendulum 11 can continue without interference while the movable object is moving. For example, when the electromechanical apparatus 1 is attached to a belt or clothes of a user, the swinging of the pendulum 11 is not interfered even when the user further wears a jacket or the like over the electromechanical apparatus 1. In addition, also when the electromechanical apparatus 1 is inserted into a pocket or the like, the swinging of the pendulum 11 is not interfered. Therefore, it is possible to continuously and unconsciously extract electric power from daily activities of a user, such as walking, turning, standing up/sitting down, raising and lowering limbs, and rolling over. Since electric power is continuously generated without interference while the movable object is moving, it is possible to extract relatively large electric power from the daily activities of the user.

[CONFIGURATION OF POWER CONVERTER CIRCUIT 15]

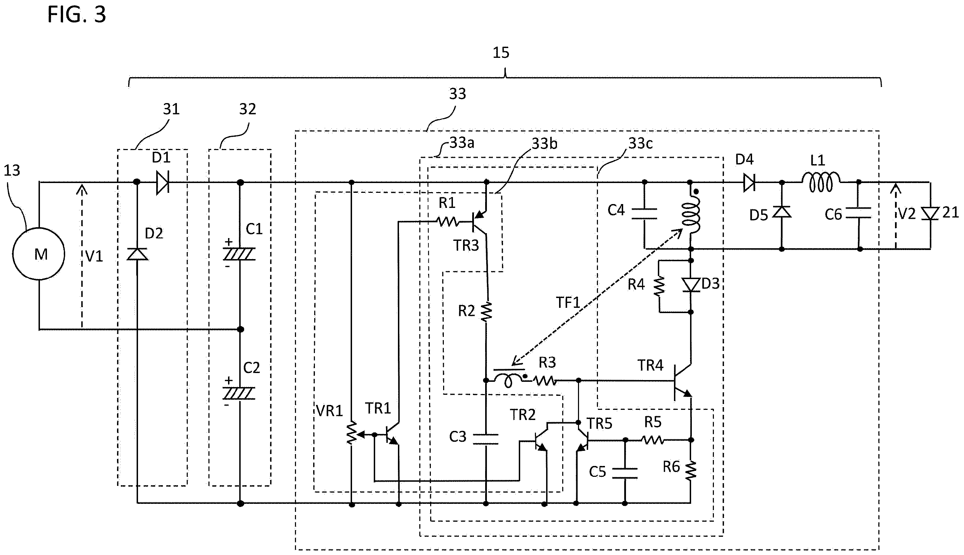

Next, with reference to Fig. 3, we explain an exemplary configuration of the power converter circuit 15.

Fig. 3 is a circuit diagram illustrating the configuration of the power converter circuit 15 of Fig. 1. The power converter circuit 15 is provided with a rectifier circuit 31, a power storage circuit 32, and a control circuit 33. The rectifier circuit 31 rectifies the electric power generated by the generator 13. Even when the generator 13 is a DC generator, rectification is required to store generated electric power in a capacitor or a secondary battery, because the generator 13 rotates in opposite directions when the pendulum 11 moves back and forth, and thus, voltages of opposite polarities are generated. The power storage circuit 32 includes at least one capacitor that stores the energy of the electric power rectified by the rectifier circuit 31. The control circuit 33 controls discharge of the power storage circuit 32. The control circuit 33 may include, for example, an active booster circuit provided with power transistors or the like, and may control the discharge of the power storage circuit 32 according to the operation of the load device 21.

Referring to Fig. 3, the rectifier circuit 31 includes two diodes D1 and D2. The power storage circuit 32 includes two capacitors C1 and C2. The control circuit 33 includes capacitors C3 to C6, diodes D3 to D5, a coil L1, resistors R1 to R6, a variable resistor VR1, a transformer TF1, and transistors TR1 to TR5. In addition, in the example of Fig. 3, the load device 21 includes a light emitting diode (LED).

The diodes D1 and D2 and the capacitors C1 and C2 constitute a voltage doubler rectifier circuit that performs voltage doubling rectification of the voltage generated by the generator 13. During a series of actions including movements in opposite directions, such as swinging of the pendulum 11, voltages of opposite polarities is generated when the pendulum 11 moves back and forth. By performing the voltage doubling rectification on the generated voltage, instead of full wave rectification, it is possible to twice the voltage stored during the series of actions, as compared to that of the full wave rectification. As a result, it is possible to operate subsequent-stage circuits of the power storage circuit 32 at a high voltage, and improve the efficiency of the subsequent-stage circuits. On the other hand, in the case of the full wave rectification, since the same extent of voltage is generated when the pendulum 11 moves to the right and to the left, doubling the duration of power generation does not increase the stored electrical energy.

The capacitors C1 and C2 are, for example, electrolytic capacitors. The capacitors C1 and C2 may be electric double layer capacitors, secondary batteries, or the like.

In the control circuit 33, the capacitors C3 to C5, the diode D3, the resistors R1 to R6, the transformer TF1, and the transistors TR2 to TR5 constitute an inverter circuit 33a. The inverter circuit 33a operates as a voltage resonance inverter circuit, and performs soft switching (zero volt switching). In addition, the capacitor C3, the resistor R1, the variable resistor VR1, and the transistors TR1 to TR3 constitute a voltage setting circuit 33b. The voltage setting circuit 33b uses the variable resistor VR1 and the transistor TR1 to set the voltage range in which the electromechanical apparatus 1 operates, particularly set a lower limit voltage of an output voltage of the power storage circuit 32. The control circuit 33 stops supplying electric power from the power storage circuit 32 to the load device 21 (light emitting diode), when the voltage across the both ends of the capacitors C1 and C2 of the power storage circuit 32 is equal to or lower than the lower limit voltage set by the voltage setting circuit 33b. In addition, the capacitors C3 and C5, the resistors R1 to R3, R5, and R6, the transformer TF1, and the transistors TR2, TR3, and TR5 constitute a constant-current control circuit 33c.

In general, when a capacitor is charged from a completely empty state, the theoretical efficiency of charging is 50%. Further, when the load device is operated at a time different from that of power generation, this electric power is required, and therefore, the capacitor needs to store the minimum energy at all times. In addition, when the load device is operated, the minimum voltage enough to start the transistors and others of the control circuit is required. For these reasons, the control circuit 33 sets the lower limit voltage of the power storage circuit 32. For example, it is assumed that the generated voltage at the time of power generation per one generator 13 (induced electromotive force, speed electromotive force) is 12 (V). In this case, when the voltage V1 of the capacitor C1 (assuming capacity C1 = 0.01 F) after generating electric power for 1 second is 10V, the energy of the capacitor C1 is $1/2 \times C1 \times V1^2 /= 0.5$ (J). Subsequently, when the control circuit 33 operates the load device 21, and the voltage of the capacitor C1 decreases to the minimum voltage V01 (assuming 1.5 (V)), the remaining energy of the capacitor C1 is $1/2 \times C1 \times V01^2/= 0.011$ (J). Therefore, the available energy is about 0.49 (J). Thus, by setting the lower limit voltage, it is possible to sufficiently utilize the energy of the capacitors C1 and C2, and reliably operate the load device 21.

When the lower limit voltage is not set to the power storage circuit 32, the control circuit 33 may be omitted. In addition, the load device 21 may be provided with a control circuit that controls discharging of the power storage circuit 32 according to the operation of the load device 21.

Each embodiment of the present disclosure is directed to efficient recovery of mechanical energy utilizing the force generated by the acceleration and deceleration of a movable object, such as a human, as well as utilizing the gravity, centrifugal force, and the like. In order to increase the stored electrical energy or drive arbitrary load device, it is desirable to increase the output voltage of the generator 13. Therefore, it is important to increase the increasing gear ratio of the gear mechanism 12, or increase the counter electromotive voltage constant (an index of generation of a high induced voltage at a low speed rotation) of the generator 13. However, there are limits to the increases in these parameters due to various factors including size, loss, cost, and the like. In this case, in order to increase the output voltage of the generator 13, voltage multiplying rectification using rectification and charging, such as voltage doubling rectification, is effectively available. The voltage multiplying rectification is available when the generator 13 generates an AC output voltage. The generator 13 repeats forward rotation and reverse rotation according to the swinging of the pendulum 11 to continuously generate an AC voltage including positive and negative voltages at the output terminals. By performing the voltage doubling rectification on this AC voltage, it is possible to efficiently capture mechanical energy. In addition, by connecting three or more capacitors in series in the power storage circuit 32, further voltage multiplying rectification may be performed, such as tripling, quadrupling, and so on. By performing the voltage doubling rectification (or voltage multiplying rectification), it is possible to increase the output voltage of the power storage circuit 32, and increase stored electric of the power storage circuit 32. In addition, when the power converter circuit 15 or the load device 21 includes a booster circuit, it is possible to improve the efficiency of the booster circuit by increasing a pre-boost voltage using the voltage doubling rectification. Thus, according to the power converter circuit 15 of Fig. 3, it is possible to improve the entire efficiency of the electromechanical apparatus 1 by performing the voltage doubling rectification.

[CONFIGURATION OF PENDULUM 11]

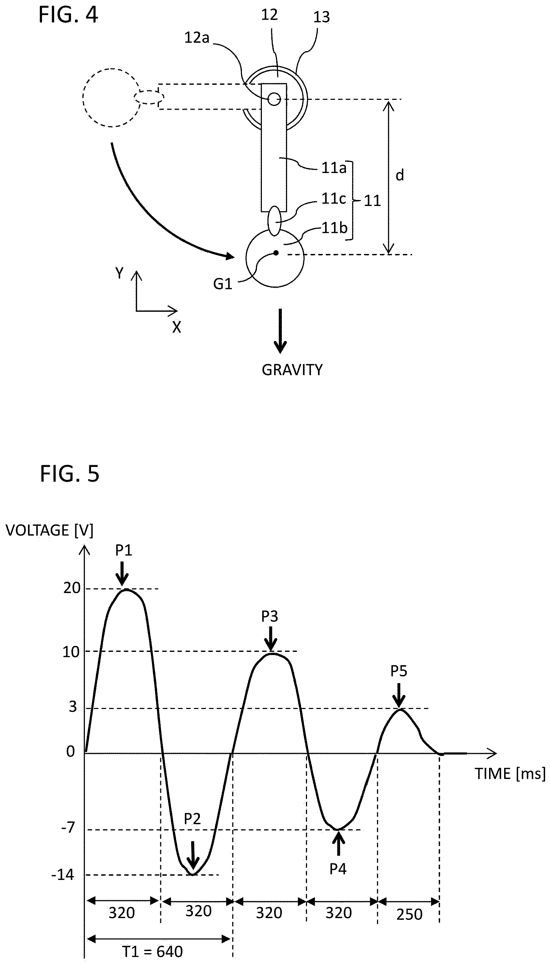

Next, with reference to Figs. 4 to 9, we explain how to determine the weight and dimensions of the pendulum 11.

The gears of the gear mechanism 12 and the rotating shaft of the generator 13 are rotated by the torque applied from the pendulum 11 to the input shaft 12a of the gear mechanism 12. The speed electromotive force is generated according to the rotational speed (or angular velocity) of the generator 13. The speed electromotive force is observed as an induced voltage at the output terminals of the generator 13.

When the output terminals of the generator 13 are electrically open, the generator 13 simply generates a voltage at the output terminals. In this case, the input torque of the gear mechanism 12 is produced mainly by the mechanical loss of the gear mechanism 12 and the generator 13, such as the friction of the gear mechanism 12, the friction of a bearing of the generator 13, and the like.

On the other hand, when the output terminals of the generator 13 are connected to the power converter circuit 15 and the load device 21, a closed circuit is formed, and a current flows from the generator 13 via the rectifier circuit 31 to the power storage circuit 32, and the power storage circuit 32 stores the generated electric power of the generator 13 as electrical energy. In this case, the output electric power of the power storage circuit 32 corresponds to a value obtained by subtracting the mechanical loss of the gear mechanism 12 and the generator 13, from the mechanical input that the pendulum 11 provides to the input shaft 12a of the gear mechanism 12 (simply speaking, "torque" times "rotational angular velocity"), and further subtracting the electrical loss of the rectifier circuit 31 and the power storage circuit 32. The stored electrical energy is a time integral of the instantaneous values of this output electric power. As seen from the output terminals of the generator 13, the power storage circuit 32 is an electrical load.

Therefore, in order to supply sufficient power from the electromechanical apparatus 1 to the load device 21, it is required to determine the weight and dimensions of the pendulum 11 in consideration of the mechanical loss of the gear mechanism 12 and the generator 13, and the electrical loss of the power converter circuit 15.

When the pendulum 11 swings at a constant speed and within a constant angular width, it is expected that as the increasing gear ratio of the gear mechanism 12 increases, the rotation speed of the generator 13 increases, the speed electromotive force increases, the output voltage of the generator 13 increases, and the generated electric power increases. However, when the increasing gear ratio increases, the number of gears and/or the number of stages of the gear mechanism 12 also increase, and the mechanical loss increases due to friction of the gears and the like. In a case where there is a large mechanical loss of the gear mechanism 12, a heavy and long arm 11a is required, for example, when the electromechanical apparatus 1 is attached to a body of a user, and the pendulum 11 should be swung through normal walking. Assuming that the electromechanical apparatus 1 is attached to a waist or the like of a user and generates electric power through walking, it is considered that the maximum weight of the pendulum 11 is up to about 250 g, and the maximum length of the arm 11a is up to about 10 cm, and an electromechanical apparatus with a larger or heavier pendulum is impractical for a user to wear. In order to supply sufficient electric power from the electromechanical apparatus 1 to the load device 21 even through a person's normal walking, the pendulum 11 needs to be able to easily swing under the conditions of the weight and dimensions of the pendulum 11.

Fig. 4 is a schematic diagram for explaining how to determine the weight and dimensions of the pendulum 11 of Fig. 1. In order to determine the weight and dimensions of the pendulum 11, temporal variations of the output voltage of the generator 13 were observed by releasing the pendulum 11 at a position of 90 degrees with respect to a plumb line (a straight line parallel to the Y axis), where the frame 14 and the housing 16 in Fig. 1 were removed. The length "d" from the input shaft 12a of the gear mechanism 12 to the center of gravity G1 of the pendulum 11 is determined as the dimensions of the pendulum 11.

Fig. 5 is a graph schematically illustrating temporal variations of the output voltage V1 of the generator 13 when the output terminals of the generator 13 of Fig. 4 are electrically open. As illustrated in Fig. 5, the output voltage of the generator 13 gradually attenuates after releasing the pendulum 11 at the position of 90 degrees with respect to the plumb line. With reference to Fig. 5, the magnitude of tolerable mechanical loss was investigated. As a result, when the output terminals of the generator 13 are electrically open, if at least total four positive and negative peaks appear in the output voltage of the generator 13 after the pendulum 11 is released at the position of 90 degrees with respect to the plumb line, it is determined that the mechanical loss is sufficiently small and electric power can be generated efficiently. Therefore, the weight of the pendulum 11, and the length "d" from the input shaft 12a of the gear mechanism 12 to the center of gravity G1 of the pendulum 11 are set such that, when the output terminals of the generator 13 are electrically open, at least total four positive and negative peaks appear in the output voltage of the generator 13 after the pendulum 11 is released at the position of 90 degrees with respect to the plumb line.

In addition, in order to determine the weight and dimensions of the pendulum 11, a first time length T1 associated with the mechanical loss occurring when the output terminals of the generator 13 are electrically open is measured as illustrated in Fig. 5. The first time length T1 indicates, when the output terminals of the generator 13 are electrically open, a time length from when the output voltage of the generator 13 starts at zero voltage upon the pendulum 11 is released at the position of 90 degrees with respect to the plumb line, to when the output voltage of the generator 13 reaches zero voltage after reaching a first positive or negative peak and a second negative or positive peak.

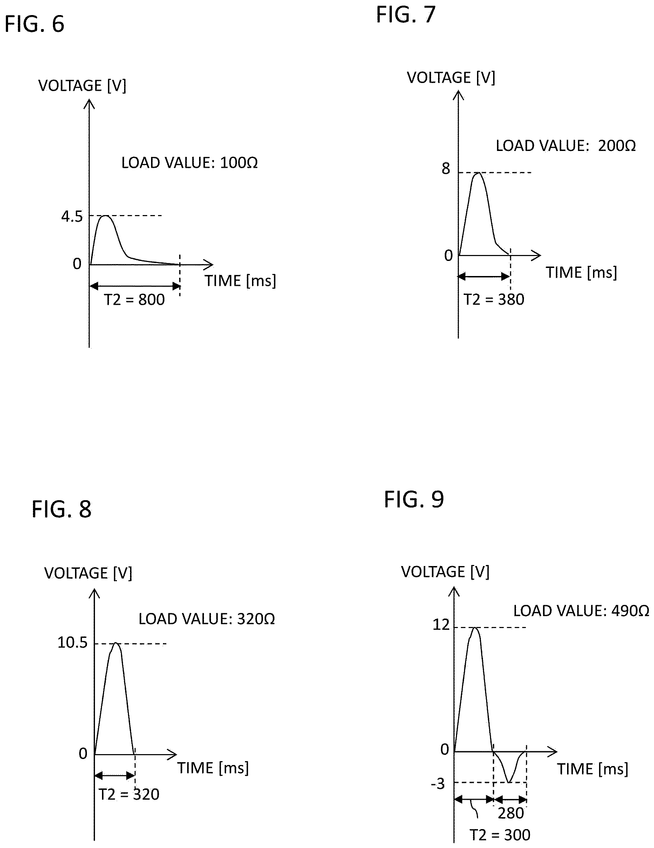

Fig. 6 is a graph schematically illustrating temporal variations of the output voltage V1 of the generator 13 of Fig. 4 when the output terminals of the generator 13 are connected to a load device having a load value of 100 Ω. Fig. 7 is a graph schematically illustrating temporal variations of the output voltage V1 of the generator 13 of Fig. 4 when the output terminals of the generator 13 are connected to a load device having a load value of 200 Ω. Fig. 8 is a graph schematically illustrating temporal variations of the output voltage V1 of the generator 13 of Fig. 4 when the output terminals of the generator 13 are connected to a load device having a load value of 320 Ω. Fig. 9 is a graph schematically illustrating temporal variations of the output voltage V1 of the generator 13 of Fig. 4 when the output terminals of the generator 13 are connected to a load device having a load value of 490 Ω. Here, in Figs. 6 to 9, it is assumed that the output terminals of the generator 13 are connected to a virtual load device including both the power converter circuit 15 of Fig. 1 and the load device 21. In order to determine the weight and dimensions of the pendulum 11, a second time length T2 associated with the mechanical loss and the electrical loss occurring when the output terminals of the generator 13 are connected to the power converter circuit 15 and the load device 21 was measured as illustrated in Figs. 6 to 9. The second time length T2 indicates, when the output terminals of the generator 13 are connected to the power converter circuit 15 and the load device 21, a time length from when the output voltage of the generator 13 starts at zero voltage upon the pendulum 11 is released at the position of 90 degrees with respect to the plumb line, to when the output voltage of the generator 13 reaches zero voltage again after reaching a first positive or negative peak. According to Figs. 6 to 9, it can be seen that the second time length T2, that is, the attenuation time of the output voltage of the generator 13 varies according to the load value of the load device.

With reference to Figs. 5 to 9, the magnitudes of the tolerable mechanical loss and the tolerable electrical loss were investigated. As a result, it is determined that when the second time length T2 is shorter than the first time length T1, the mechanical loss and the electrical loss are sufficiently small, and electric power can be generated efficiently. Therefore, the weight of the pendulum 11, and the length "d" from the input shaft 12a of the gear mechanism 12 to the center of gravity G1 of the pendulum 11 are set such that the second time length T2 is shorter than the first time length T1.

As described above, the weight of the pendulum 11, and the length "d" from the input shaft 12a of the gear mechanism 12 to the center of gravity G1 of the pendulum 11 are set such that, when the output terminals of the generator 13 are electrically open, at least total four positive and negative peaks appear in the output voltage of the generator 13 after the pendulum 11 is released at the position of 90 degrees with respect to the plumb line, and the second time length T2 is shorter than the first time length T1. By thus determining the weight and dimensions of the pendulum 11, it is possible to maximize the electric power that can be supplied to the load device 21.

According to the electromechanical apparatus 1, when the pendulum 11 swings within an angular width of up to several tens of degrees, the generator 13 repeats forward rotation and reverse rotation a plurality of times. As a result, the electromechanical apparatus 1 can provide high output voltage, large output electric power, stored energy, and the like. In addition, the electromechanical apparatus 1 with a reduced number of parts and having a small size can be provided as, for example, a wearable apparatus. In addition, when the pendulum 11 is displaced from the plumb line in response to the movement of the movable object, restoring force due to the gravity acts on the pendulum 11. Since this restoring force can further generate electric power, electric power can be generated efficiently.

The mechanical load of the gear mechanism 12 and the generator 13, and the electrical load of the power converter circuit 15 and the load device 21 may be determined such that the weight and dimensions of the pendulum 11 satisfy the above-described conditions, and such that the weight of the pendulum 11 is 250 g or less, and the length of the pendulum 11 is 10 cm or less. Thus, it is possible to provide a small electromechanical apparatus 1.

The center of gravity G1 of the pendulum 11 may be provided, in the pendulum 11, at a position within 1/3 of the total length of the pendulum 11 from the tip opposite to the position connected to the input shaft 12a of the gear mechanism 12. Thus, it is possible to efficiently generate electric power, and provide a small electromechanical apparatus 1.

The housing 16 may be formed with a thickness (length in the Z direction) of 50 mm or less. Thus, a user to which the electromechanical apparatus 1 is attached for use is less likely to feel discomfort.

As described above, in the pendulum 11, the connecting member 11c may connect the arm 11a and the bob 11b so as to be movable to each other. For example, the bob 11b may be connected to the arm 11a such that the pendulum 11 acts as a double pendulum (the bob 11b is a secondary pendulum). In this case, it is possible to change the period of free oscillation while keeping the dimensions of the pendulum 11. Thus, it is possible to improve the degree of freedom in design in accordance with the application of the electromechanical apparatus 1, and in accordance with the load device 21.

[EXEMPLARY USES OF ELECTROMECHANICAL APPARATUS 1]

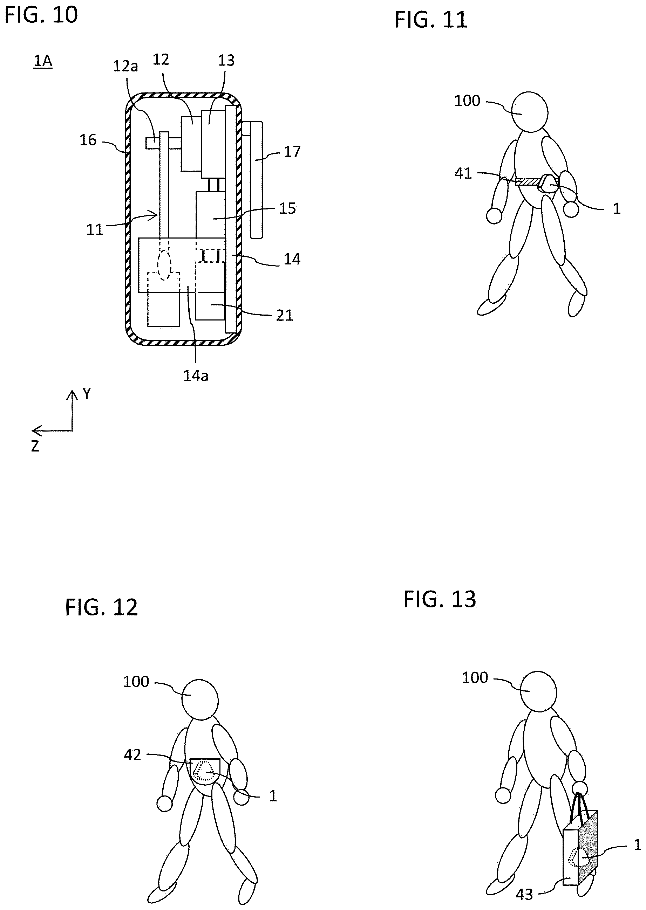

Fig. 10 is a side view illustrating a configuration of an electromechanical apparatus 1A according to a first modified embodiment of the first embodiment. The electromechanical apparatus 1A may be further provided with the load device 21. The electromechanical apparatus 1A integrated with the load device 21 has improved usefulness.

Fig. 11 is a diagram illustrating first exemplary use of the electromechanical apparatus 1 of Fig. 1. Fig. 12 is a diagram illustrating second exemplary use of the electromechanical apparatus 1 of Fig. 1. Fig. 13 is a diagram illustrating third exemplary use of the electromechanical apparatus 1 of Fig. 1.

As illustrated in Fig. 11, the electromechanical apparatus 1 may be attached to a belt 41 wrapped around the body of a user 100, for example, attached to the belt 41 by the fastener 17. The belt 41 may be wrapped around, for example, the torso (waist or the like), upper arm, forearm, wrist, upper leg, lower leg, ankle of the user 100, or the like. In addition, the belt 41 may be provided to the electromechanical apparatus 1, instead of the fastener 17 in Fig. 1. In addition, the electromechanical apparatus 1 may be directly attached to an ear of the user 100, or the like. In addition, as illustrated in Fig. 12, the electromechanical apparatus 1 may be inserted into a pocket 42 provided in the clothes (for example, shirt, trousers) of the user 100, or the like. In addition, the electromechanical apparatus 1 may be attached to a hat, eyeglasses, shoes of the user 100, or the like. Thus, by attaching the electromechanical apparatus 1 to the belt 41, clothes, or the like directly worn by the user 100, it is possible to easily and reasonably generate electric power in response to the movement or body motion of the user 100. As a result, the electromechanical apparatus 1 can be used, for example, to charge a battery, or as a flashlight, in daily life.

In addition, as illustrated in Fig. 13, the electromechanical apparatus 1 may be inserted or attached to a bag 43 (for example, a handbag) carried by the user 100. In addition, the electromechanical apparatus 1 may be inserted or attached to a shoulder bag, a backpack, a suitcase, a shopping cart, umbrella, a cane, a bicycle (pedal, crank, handle, etc.), a chair (for example, backrest), other furniture, or the like. The physical movement of the user 100 also causes movement of the equipment that the user 100 has or uses. Therefore, by attaching the electromechanical apparatus 1 to an object used indirectly by the user 100, it is possible to easily and reasonably generate electric power in response to the movement or body motion of the user 100.

The electromechanical apparatus 1 may be attached to a door, a window, or the like moved by the user 100, or may be attached to a movable object moved by a power other than human power. By attaching the electromechanical apparatus 1 to a fuel-powered object such as an automobile, a train (for example, a strap), or the like, or to an object powered by other energy, it is possible to easily and reasonably generate electric power. In addition, the electromechanical apparatus 1 may be attached to the body of a domestic animal or other animals. In addition, the electromechanical apparatus 1 may be attached to a tree branch that receives wind, a waterway, a place that receives raindrops, or the like. As described above, the electromechanical apparatus 1 can be used in a great variety of ways.

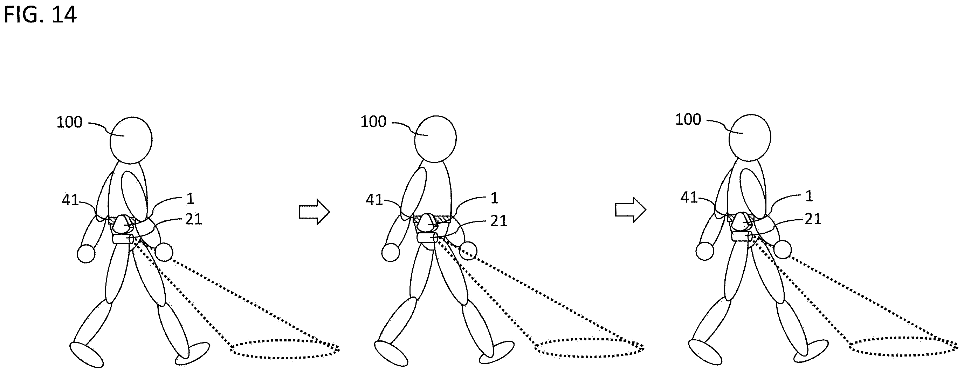

Fig. 14 is a diagram illustrating fourth exemplary use in which the electromechanical apparatus 1 of Fig. 1 is used together with the load device 21 that is a lighting device. In the example of Fig. 14, the electromechanical apparatus 1 is attached to the body of the user 100 using the belt 41, together with the load device 21. The load device 21 of Fig. 14 includes a light emitting element such as a light emitting diode. In addition, the load device 21 of Fig. 14 may be further provided with a rechargeable battery (for example, a capacitor having a large capacity, such as an electric double layer capacitor). In addition, the load device 21 of Fig. 14 may be further provided with an optical sensor and a control circuit to turn on the light emitting element only when it is dark, and to charge the internal battery when it is bright. According to the exemplary use of Fig. 14, the electromechanical apparatus 1 can generate sufficient electric power to turn on the light emitting element of the load device 21 through walking of the user 100.

Here, we explain the principle that the electromechanical apparatus 1 generates electric power in response to walking of the user 100. For example, in a case where the electromechanical apparatus 1 is attached to the waist of the user 100 as illustrated in Fig. 14, when the user 100 is stationary, the bob 11b is stationary along the plumb line (usually at the closest position to the ground). The walking of the user 100 is not a uniform linear motion, but is repetition of acceleration and deceleration in the traveling direction over time. When the user 100 starts walking (that is, when the user 100 accelerates), the bob 11b tends to keep stationary due to inertia, and the gear mechanism 12 and the generator 13 move together with the user 100. In this case, a moment (rotational force) is applied to the input shaft 12a of the gear mechanism 12 via the arm 11a to rotate the gear mechanism 12 and the generator 13, and thus, a speed electromotive force is generated at the output terminals of the generator 13. When the arm 11a rotates over a small angle, the bob 11b is raised from the position at which the arm 11a is stationary, and therefore, the potential energy of the bob 11b increases. During the period of the uniform linear motion of walking, the bob 11b returns to the original position and recovers the potential energy. In addition, when the user 100 decelerates, a moment (rotational force) is applied to the input shaft 12a of the gear mechanism 12 in the direction opposite to that when the user 100 accelerates. When the user 100 and the electromechanical apparatus 1 accelerate and decelerate in such a manner, it is considered that the pendulum 11 can efficiently move, and electric power can be generated efficiently, by matching the period of swinging of the pendulum 11 with the period of acceleration and deceleration. According to each embodiment of the present disclosure, the period of swinging of the pendulum 11 is determined in consideration of not only the period of simple harmonic motion determined by the weight and dimensions of the pendulum 11 (known as the isochronism of the pendulum), but also the mechanical loss and the electrical loss as described above.

In general, movement including rapid acceleration and deceleration (for example, running) can easily generate sufficient electric power to operate the load device, even when some energy is wasted. On the other hand, in order to generate electric power from daily activities of a user not including rapid acceleration and deceleration, a highly efficient power generation system is required. Each embodiment of the present disclosure provides a power generation system sufficiently useful even in slow walking of a user, and normal walking of a user during, e.g., commute. The phrase "a power generation system sufficiently useful" means that, for example, the system can reasonably generate electric power corresponding to the brightness of an LED flashlight carried by a user when walking at night. When electric power equivalent to consumed power of the LED flashlight can be generated, it is considered that a typical communication circuit, sensor circuit, or the like can sufficiently operate. The word "reasonably" means that the power generation system does not require the conscious and excessive movement of the user for power generation, nor result in discomfort in wearing the system. As a result, it is possible to implement a small and lightweight wearable power generation system.

Hereinafter, we explain the principle that the electromechanical apparatus 1 generates electric power in response to the relatively slow walking of the user 100, in detail.

(1) When the user 100 raises one foot in a traveling direction, an inertial force acts on the bob 11b and the bob 11b tends to stay there, and on the other hand, the input shaft 12a of the gear mechanism 12 starts to move almost horizontally in front of the bob 11b that tends to stay there. Therefore, when the user 100 raises one foot in the traveling direction, the bob 11b is initially displaced from the plumb line to a side opposite to the traveling direction of the user 100. When the user 100 starts walking by raising one foot, a positive acceleration occurs in the user 100 and the electromechanical apparatus 1. The bob 11b translates with respect to the user 100 in the same direction as the user 100, at a slightly slower speed than the user 100, while increasing the rotation angle of the input shaft 12a. A moment (rotational force) is applied to the input shaft 12a via the arm 11a, and the generator 13 generates electric power. The rotation angle of the input shaft 12a at this time is defined as a negative angle, and the output voltage of the generator 13 at this time is defined as a negative voltage.

(2) Before or immediately after the user 100 raises one foot and sets the foot down on the ground, the translation movement of the user 100 is of a constant velocity or slightly decelerating motion, and the acceleration of the user 100 and the electromechanical apparatus 1 decreases or becomes zero. When a negative acceleration occurs in the user 100 and the electromechanical apparatus 1, the inertial force of the bob 11b in the current direction decreases. The input shaft 12a of the gear mechanism 12 is displaced to its maximum negative rotation angle, that is, a position where the bob 11b is balanced with the gravity, and the input shaft 12a stops. At this time, the output voltage of the generator 13 is negative.

(3) Subsequently, the bob 11b starts to move in the opposite direction (the traveling direction of the user 100) due to the gravity, and therefore, the input shaft 12a of the gear mechanism 12 starts to rotate in the positive direction. The force in the rotational direction due to the gravity becomes zero when the bob 11b reaches the plumb line, but at this time, the bob 11b has velocity and kinetic energy. Due to this kinetic energy, the bob 11b tends to further move in the traveling direction of the user 100 against the gravity, and the rotation angle of the input shaft 12a further increases positively. At this time, a negative acceleration further occurs in the bob 11b due to the deceleration of the user 100, and the rotation angle of the input shaft 12a increases. While the user 100 sets one foot down on the ground and raises the other foot, the speed of user 100 decreases. During this time, the inertial force on the bob 11b has decreased. When all the kinetic energy of the bob 11b is converted into potential energy, the input shaft 12a stops at the maximum positive rotation angle. During this time, the generator 13 continues to generate electric power. At this time, the output voltage of the generator 13 is positive.

(4) Next, before or immediately after the user 100 raises the other foot, the bob 11b starts to move in the direction opposite to the traveling direction of the user 100 due to the gravity and the inertial force due to deceleration, and therefore, the input shaft 12a of the gear mechanism 12 starts to rotate in the negative direction. Also after the bob 11b passes through the plumb line, the input shaft 12a continues to rotate in the negative direction due to the kinetic energy and the inertial force due to deceleration. The input shaft 12a rotates to an angle substantially the same as or larger than that of (3) mentioned above, and stops at the angle. At this time, the output voltage of the generator 13 is negative.

(5) Thereafter, the above-described operations are repeated when the user 100 steps both feet alternately, and the generator 13 continuously generates electric power.

(6) When the above-described operations can be performed, it is possible to most effectively extract the mechanical energy from the walking of the user 100. However, in the above description, only the principle of conversion among mechanical energy (inertial force of the bob 11b, kinetic energy of the bob 11b, and potential energy of gravity) is mentioned. In actual practical power generation, the output voltage of the generator 13 generated by the above-described operations may be directly consumed by the load device 21, or may be rectified and/or stored before being supplied to the load device 21. That is, the above-described operations may be performed while converting, charging, and/or consuming energy.

(7) In order to increase the stored electrical energy, it is conceivable to increase the output voltage and/or the duration of power generation of the generator 13. However, since the duration of power generation is determined by the application of the electromechanical apparatus 1, we discuss here how to increase the output voltage of the generator 13. In order to increase the output voltage of the generator 13 (that is, the induced voltage proportional to the rotation speed (induced electromotive force)), the rotation speed of the generator 13 is increased, that is, the rotation speed (or angular velocity) of the input shaft 12a of the gear mechanism 12 is increased. The present inventor experimentally found that the generated electric power is maximized when the pendulum 11 moves back and forth once within a time period during which the user 100 takes a step, defined this time period as one cycle, and calculated conditions to be satisfied for the pendulum 11 to rotate by a large angle.

(8) In a case where the energy consumption is very small, for example, where it is assumed that only the friction loss of the small gear mechanism 12 occurs as a mechanical loss, the series of actions of the pendulum 11 can be approximated to a simple harmonic motion of the pendulum. The period T of the pendulum 11 is roughly determined by the following mathematical expression (1). The mass of the bob 11b is not relevant to the period T. Most of the energy is conserved, and only the energy lost due to the friction loss needs to be supplemented by the inertial force generated by the walking of the user 100. Using mathematical expression (1), the length "d" from the input shaft 12a of the gear mechanism 12 to the center of gravity G1 of the pendulum 11 is calculated by the following mathematical expression (2). For example, it is assumed that the average walking speed of the user 100 is 4.8 km/h (1.33 m/s), and the stride is 0.7 m. In this case, the walking time per step is 0.525 seconds. As described in (7) above, when one cycle of the pendulum 11 corresponds to the time taken by one step, d = 68 mm is obtained by substituting T = 0.525 seconds and the gravitational acceleration g = 9.8 m/s into mathematical expression (1). Therefore, it is possible to provide a sufficiently small and portable electromechanical apparatus 1.

$$T = 2\pi\sqrt{d/g} \qquad (1)$$

$$d = gT^2/(2\pi)^2 \qquad (2)$$

(9) On the other hand, in a case where the electric power generated by the generator 13 is consumed by the load device 21 or stored in the power storage circuit 32, most of the mechanical energy is used for consumption or charging, and therefore, the amplitude of the pendulum 11 decreases immediately. In addition, in this case, if the mass of the bob 11b is small, then its inertial force is small, and only movement with a minute amplitude (small angle) is possible, and therefore, sufficiently large energy cannot be extracted. In order to continuously extract large energy, the mass of the bob 11b is increased to increase the inertial force occurring when the user 100 walks and accelerates or decelerates. However, if the bob 11b is made too heavy, the user 100 may feel discomfort, for example, feel that the generator 13 is heavy when walking, or feel that the body is swayed. Experimentally, the present inventor has a feeling that such discomfort can be reduced when the weight ranges from several tens to several hundreds of grams.

(10) The important point in conversion from mechanical energy to electrical energy and charging as mentioned above resides in how to easily extract electrical energy from mechanical energy without waste. Here, the phrase "without waste" means to extract the maximum electrical energy from the walking of the user 100, and the word "easily" means to avoid discomfort in power generation, and prevent the weight and size of the power generation system from disturbing the user 100. That is, it can be said to be important to achieve both "maximization of the electrical energy to be extracted" and "reduction of size and weight". According to each embodiment of the present disclosure, it is possible to provide an electromechanical apparatus that satisfies these conditions.

As described above, when a movable object repeats acceleration and deceleration, the gravity as well as the inertial forces due to acceleration and deceleration act on the bob 11b of the electromechanical apparatus 1. The torque generated by these forces is transmitted to the gear mechanism 12 and the generator 13 via the arm 11a, and the generator 13 repeats forward rotation and reverse rotation. It is possible to continuously generate the torque that rotates the gear mechanism 12 and the generator 13, so that the generator 13 repeats forward rotation and reverse rotation, and therefore, it is possible to continuously operate the load device 21 and/or store large electrical energy.

In addition, when the electromechanical apparatus 1 is attached to the body of the user 100, the electromechanical apparatus 1 can continuously and stably generate electric power through the continuous actions of the user 100, such as walking. The electromechanical apparatus 1 can generate electric power of several tens of mW to several W or more, and generate energy of several J to about 10000 J through walking for several minutes to several hours in commute, shopping, or the like. For example, when the user 100 wears the electromechanical apparatus 1 that generates 1 W of electric power, and the user 100 walks for 2 hours, it is possible to generate 1 W × 2 hours × 60 minutes × 60 seconds = 7200 J, that is, 1718 cal of energy. This energy can heat 23 cc of water at 25 degrees to 100 degrees. When the electromechanical apparatus 1 prototyped by the present inventor is attached to the body of the user 100, it is possible to generate energy for turning on an LED flashlight for several seconds to several tens of seconds through walking for several seconds. The electromechanical apparatus 1 may supply electric power to the load device 21, for example, including a lighting device. In this case, the electromechanical apparatus 1 can operate the load device 21 so as to provide sufficiently bright lighting to the user 100 when walking at night. In addition, the electromechanical apparatus 1 may supply electric power to the load device 21 including a rechargeable battery for a smartphone or the like. In addition, the electromechanical apparatus 1 may supply electric power to the load device 21, for example, including a sensor for measuring the pulse, respiration, body temperature, blood pressure, and/or the like of the user 100. In this case, the electromechanical apparatus 1 may operate the load device 21 so as to measure the pulse, respiration, blood pressure, and/or the like of the user 100 in real time, for example, when the user 100 is walking, and if necessary, so as to notify other apparatuses of the measurement results. As a result, it is possible to manage the physical conditions of the user 100. In addition, the electromechanical apparatus 1 may supply electric power to the load device 21 including, for example, a communication device or the like capable of receiving GPS signals. In this case, the electromechanical apparatus 1 can operate the load device 21 so as to continuously or periodically obtain the position information of the user 100.

In addition, when the electromechanical apparatus 1 is attached to the body of the user 100, the electromechanical apparatus 1 can generate electric power from a short-term action (for example, an instantaneous action) or a small action of the user 100, such as turning, standing up/sitting down, raising and lowering limbs, and rolling over. The electromechanical apparatus 1 can generate electric power sufficient to operate a circuit having a small power consumption, such as a sensor and/or a communication device, for example, electric power of tens of mW to several W, even from a short-term action or a small action of the user 100. The electromechanical apparatus 1 may supply electric power to the load device 21, for example, including a sensor for measuring the pulse, respiration, or the like of the user 100. In this case, the electromechanical apparatus 1 may operate the load device 21 so as to measure the pulse, respiration, or the like of the user 100 in real time, and if necessary, so as to notify other apparatuses of the measurement results. The electromechanical apparatus 1 may supply electric power to the load device 21 including, for example, a communication device or the like capable of receiving GPS signals. The electromechanical apparatus 1 may supply electric power to the load device 21 including, for example, a communication device or the like capable of transmitting a polling signal to a receiver in a home of the user 100. In this case, the home receiver may notify, for example, the relatives of the user 100, who live in a remote place, of the status of the user 100.

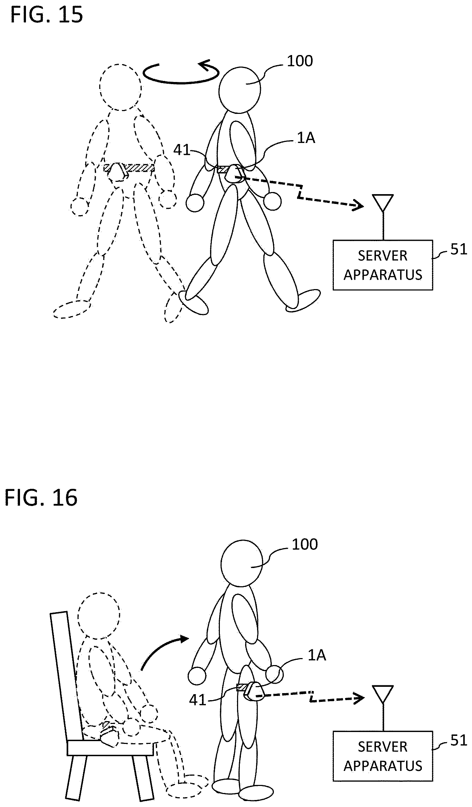

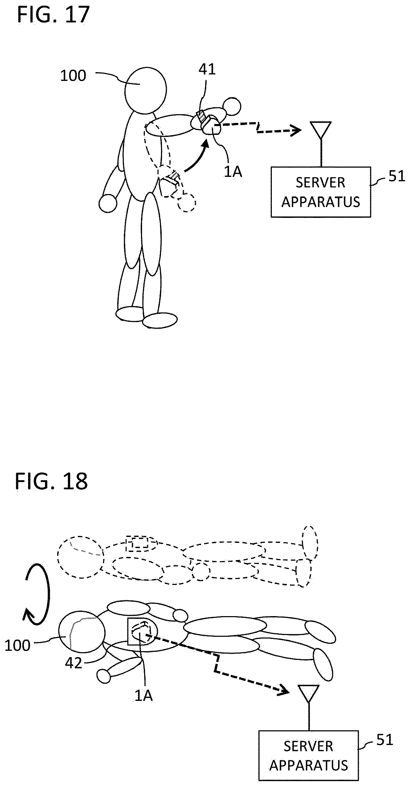

Fig. 15 is a diagram illustrating first exemplary use of the electromechanical apparatus 1A of Fig. 10. Fig. 16 is a diagram illustrating second exemplary use of the electromechanical apparatus 1A of Fig. 10. Fig. 17 is a diagram illustrating third exemplary use of the electromechanical apparatus 1A of Fig. 10. Fig. 18 is a diagram illustrating fourth exemplary use of the electromechanical apparatus 1A of Fig. 10. In the examples of Figs. 15 to 17, the electromechanical apparatus 1A is attached to the body of the user 100 using the belt 41. In the example of Fig. 18, the electromechanical apparatus 1A is inserted into the pocket 42 provided in the clothes of the user 100. The electromechanical apparatus 1A of Figs. 15 to 18 is further provided with the load device 21 as illustrated in Fig. 10. In the examples of Figs. 15 to 18, the load device 21 includes a communication device capable of transmitting a polling signal to a server apparatus 51 provided at a home of the user 100, a hospital, other facilities, or the like. The electromechanical apparatus 1A generates electric power in response to turning (Fig. 15), standing up/sitting down (Fig. 16), raising and lowering limbs (Fig. 17), rolling over (Fig. 18), or the like, and operates the load device 21 so as to transmit a polling signal to the server apparatus 51.

When the electromechanical apparatus 1 (or 1A) is attached to the body of the user 100, the electromechanical apparatus 1 can generate electric power from a force applied to the pendulum 11 (inertial force, etc.) due to a short-term action or small action of the user 100, as described above. Therefore, the load device 21 including the communication device can be used as a behavior sensor of the user 100. In the examples of Figs. 15 to 18, it is possible to follow the behavior and/or position of the user 100 (for example, a senior citizen), for example, at a home, a hospital, other facilities, or the like, and therefore, it is possible to monitor (watch) the status of the user 100.

For example, in the action of standing up/sitting down of the user 100, the pendulum 11 moves due to the action of the user 100, and also due to the gravity acting on the pendulum 11. In addition, for example, in the action of turning of the user 100 (that is, the action of turning around by twisting the body), the pendulum 11 moves due to the action of the user 100, and also due to the centrifugal force acting on the pendulum 11. The magnitude, waveform, and positive or negative polarity of the output voltage of the generator 13 vary according to the different actions of the body of the user 100. Therefore, it is possible to detect an action of the body of the user 100 based on these characteristics of the output voltage of the generator 13.

In addition, the electromechanical apparatus 1 may be attached to a movable object that is a non-living matter. For example, by attaching the electromechanical apparatus 1, and the load device 21 including the communication device, to a package, in a distribution center or the like, it is possible to track the package, or provide an anti-theft function. By attaching the electromechanical apparatus 1, and the load device 21 including the communication device, to a door, a window, or the like, it is possible to notify that a family member has come home, or detect an intruder and call the police.

Exemplary applications of the electromechanical apparatus 1 and the load device 21 according to the embodiment are listed below.

- Charging mobile phones
- Lighting while walking or running (flashlight, safety light)
- Watching and position detection by detecting the movement of a body of a user and transmitting a signal
- Measuring momentum of a movable object
- Ultra-high efficiency emergency generator that generates electric power by the movement of a body of a user (for charging mobile phones, etc.)
- Easy emergency generator that generates electric power by one-handed operation, easy generator that generates electric power by stepping while sitting (for charging mobile phones, etc.)
- Illuminations using natural vibrations (electromechanical apparatuses and LEDs provided on tree branches, etc.)
- Detecting theft (making buzzer sound, transmitting a signal)
- Transmitting and receiving position information, movement information, body temperature or pulse information, and the like of a domestic animal or the like.

When converting mechanical energy of a person's actions into electrical energy, even when the efficiency of 100% is achieved, the person consumes the energy according to the law of conservation of energy (precisely, the energy is stored externally as electrical energy). The person obtains energy from food and air, generates mechanical output, that is, force and displacement, through the movement of muscles, and consumes energy for the duration of the movement. When moving too long, the person feels tired and then hungry. For example, in a case of a dynamo conventionally used as a generator for supplying electric power to bicycle lighting, when an electric current flows through an incandescent lamp as a light source, the user does not feel tired, but feels a kind of discomfort, that is, feels heavy in pedaling, as compared with a case where an electric current does not flow.

Each embodiment of the present disclosure is the same as the prior art in that a person's energy is converted into energy consumed by the load device 21, or electrical energy to be stored in the power storage circuit 32, but is devised to reduce feeling of discomfort and fatigue. According to each embodiment of the present disclosure, as can be seen from the principle, it is the pendulum 11 that receives the force from the person's actions, and it starts by the inertial force of acceleration and deceleration due to the mass (weight) of the pendulum 11. The weight of the pendulum 11 (or bob 11b) can be set in various manners according to the application of the electromechanical apparatus 1, and according to the load device 21, and for example, is set to 100 g. This weight corresponds to the weight of about one-half cup of water, and the weight can be clearly recognized when placed on a palm. However, a person usually wears clothes of several hundred grams to several kilograms. In addition, items to be carried, such as wallets, bags, and water bottles, also have weight of several hundred grams or more. Therefore, actually, a person always wears items of about 5 kg, including clothes and other carried items. Nevertheless, the reason why people usually do not feel the weight of clothes and other carried items is that their weight is distributed over the entire body, and they are put on various locations of the body. Regarding the latter, even when the carried items are attached to locations close to the torso, such as the waist and shoulders, a person is less likely to feel their weight. According to each embodiment of the present disclosure, the electromechanical apparatus 1 has a weight sufficiently smaller than the weight of the clothes already worn and other carried items, and is attached to a position close to the center of the body (for example, the waist). Therefore, it is possible to implement such an electromechanical apparatus 1 that a person is less likely to feel its weight, both when stationary and when moving. In addition, by increasing the length of the arm 11a, it is possible to reduce the weight of the bob 11b. Therefore, according to each embodiment of the present disclosure, it is possible to unconsciously and easily generate electric power, so that it is less likely to feel discomfort and weight.

When the electromechanical apparatus 1 is attached to the body of a user who performs training, such as running, or to a training apparatus, it is also possible to significantly increase generated electric power by increasing the weight of the pendulum 11.

[OTHER MODIFIED EMBODIMENTS OF FIRST EMBODIMENT]

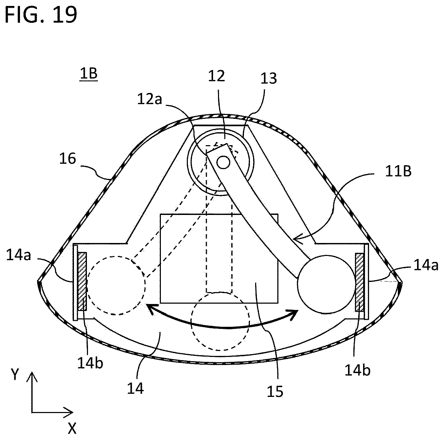

Fig. 19 is a front view illustrating a configuration of an electromechanical apparatus 1B according to a second modified embodiment of the first embodiment. The electromechanical apparatus 1B is provided with a pendulum 11B made of an elastic body, such as a spring or rubber, instead of the pendulum 11 of Figs. 1 and 2. By using the pendulum 11B made of the elastic body, it is possible to optimally adjust the magnitude of torque transmitted from the pendulum to the input shaft 12a of the gear mechanism 12, and the time length during which the torque is transmitted, according to the application of the electromechanical apparatus 1B, and according to the load device 21. In addition, in a case that the pendulum is configured as a rigid body, the pendulum itself or the gear mechanism 12 may be broken when a large force is applied to the pendulum. By using the pendulum 11B made of an elastic body, it is possible to avoid such breaking.

The pendulum 11 of Figs. 1 and 2 may be also provided with an arm 11a made of an elastic body, such as a spring or rubber. Thus, it is possible to optimally adjust the magnitude of torque transmitted from the pendulum 11 to the input shaft 12a of the gear mechanism 12, and the time length during which the torque is transmitted, according to the application of the electromechanical apparatus 1, and according to the load device 21.

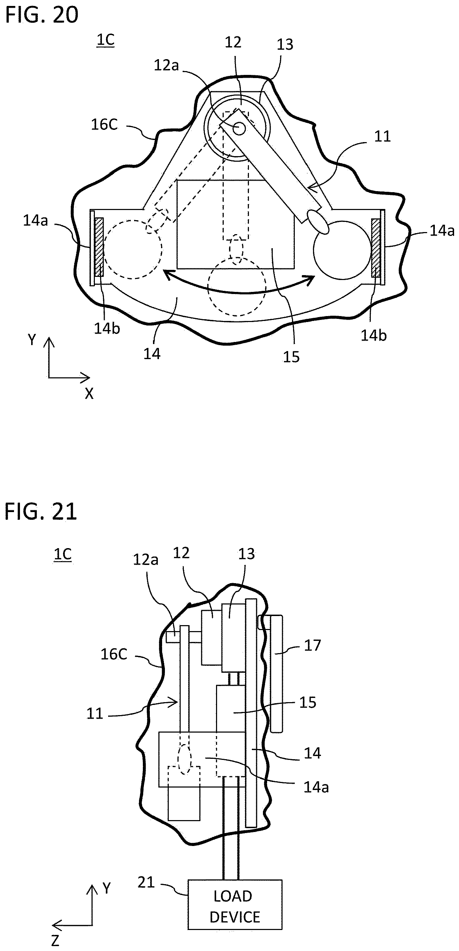

Fig. 20 is a front view illustrating a configuration of an electromechanical apparatus 1C according to a third modified embodiment of the first embodiment. Fig. 21 is a side view illustrating the configuration of the electromechanical apparatus 1C of Fig. 20. The electromechanical apparatus 1C is provided with a soft case 16C made of cloth, leather, or the like, instead of the housing 16 of Figs. 1 and 2.

The electromechanical apparatus 1C is provided with a frame 14 located at a fixed position relative to the gear mechanism 12 and the generator 13, in a manner similar to that of the electromechanical apparatus 1 of Figs. 1 and 2. As described above, the frame 14 is formed so as to at least partially cover the pendulum 11 and its trajectory when the pendulum 11 swings about the input shaft 12a of the gear mechanism 12 at least within a predetermined angular range. As a result, the components of the electromechanical apparatus 1C can be covered with the soft case 16C, while keeping the free movement of the pendulum 11.

When the whole of the electromechanical apparatus is covered with a hard housing, the size of the apparatus increases, the hand or the like of the user easily hits the housing, and it is more discomfort (rugged) when attached to a body of a user increases. In addition, in this case, the electromechanical apparatus tends to appear "mechanical". On the other hand, the electromechanical apparatus 1C of Figs. 20 and 21 does not require to cover the whole of the apparatus with a hard housing, and therefore, it is possible to reduce the size of the apparatus, and reduce the discomfort when attached. In addition, the degrees of freedom in shape, color, pattern, and design (for example, skeleton) of the whole of the electromechanical apparatus are improved, and therefore, its appearance can be natural and fashionable.

The electromechanical apparatus may be further provided with a soft case 16C so as to cover the rigid housing 16 as illustrated in Figs. 1 and 2. In addition, the electromechanical apparatus may be configured such that a part thereof is covered with a hard housing, and the rest is covered with a soft case. In this case, the hard housing and the soft case may be configured as separate members, or configured integrally.

[SUMMARY OF FIRST EMBODIMENT]

According to the electromechanical apparatus of the first embodiment, the electromechanical apparatus 1 is provided with: a gear mechanism 12 that has an input shaft 12a and transmits rotation of the input shaft 12a; a generator 13 that has output terminals and generates electric power at the output terminals in response to rotation transmitted by the gear mechanism 12; and a pendulum 11 that is connected to the input shaft 12a of the gear mechanism 12. The electromechanical apparatus 1 is further provided with a frame 14 located at a fixed position relative to the gear mechanism 12 and the generator 13. The frame 14 is formed so as to at least partially cover the pendulum 11 and a trajectory of the pendulum 11 when the pendulum 11 swings about the input shaft 12a of the gear mechanism 12 at least within a predetermined angular range. The pendulum 11 swings about the input shaft 12a of the gear mechanism 12 in response to shaking of a whole of the electromechanical apparatus 1, and the generator 13 generates positive and negative voltages at the output terminals in response to swinging of the pendulum 11.

Thus, it is possible to continuously and unconsciously extract relatively large electric power from daily activities of a user.

According to the electromechanical apparatus of the first embodiment, a weight of the pendulum 11 and a length "d" from the input shaft 12a of the gear mechanism 12 to a center of gravity G1 of the pendulum 11 may be set such that, when the output terminals of the generator 13 are electrically open, at least total four or more positive and negative peaks appear in an output voltage of the generator 13 after the pendulum 11 is released at a position of 90 degrees with respect to a plumb line, and such that a second time length T2 associated with mechanical loss and electrical loss occurring when the output terminals of the generator 13 are connected to a power converter circuit 15 and a load device 21 is shorter than a first time length T1 associated with mechanical loss occurring when the output terminals of the generator 13 are electrically open. The first time length T1 indicates, in a case that the output terminals of the generator 13 are electrically open, a time length from when the output voltage of the generator 13 starts at zero voltage upon the pendulum 11 is released at the position of 90 degrees with respect to the plumb line, to when the output voltage of the generator 13 reaches zero voltage after reaching a first positive or negative peak and a second negative or positive peak. The second time length T2 indicates, in a case that the output terminals of the generator 13 are connected to the power converter circuit 15 and the load device 21, a time length from when the output voltage of the generator 13 starts at zero voltage upon the pendulum 11 is released at the position of 90 degrees with respect to the plumb line, to when the output voltage of the generator 13 reaches zero voltage again after reaching a first positive or negative peak.

Thus, by determining the weight and dimension of the pendulum 11 in such a manner, it is possible to maximize electric power to be supplied to the load device 21.

According to the electromechanical apparatus of the first embodiment, the frame 14 may be formed so as to be in contact with the pendulum 11 to limit the angular range in which the pendulum 11 swings about the input shaft 12a of the gear mechanism 12.

Thus, it is possible to provide a small electromechanical apparatus 1.

According to the electromechanical apparatus of the first embodiment, the electromechanical apparatus may be further provided with a cushion member provided on at least one of the pendulum 11 and the frame 14, at a position where the pendulum 11 and the frame 14 are contact with each other.

Thus, the pendulum 11, the gear mechanism 12, and the generator 13 are less likely to be damaged by an excessive load. In addition, it is possible to reduce noise. In addition, in a case where a user wears the electromechanical apparatus 1 for use, by providing the cushion member 14b, it is possible to reduce the impact transmitted to the user.

According to the electromechanical apparatus of the first embodiment, the electromechanical apparatus may be further provided with a fastener for attachment to a movable object.

Thus, it is possible to easily attach the electromechanical apparatus 1 to humans or other objects.

According to the electromechanical apparatus of the first embodiment, the pendulum 11 may be provided with: an arm that is connected to the input shaft 12a of the gear mechanism 12; a bob; and a connecting member that connects the arm and the bob so as to be movable to each other.

Thus, it is possible to change the period of free oscillation while keeping the dimensions of the pendulum 11.

According to the electromechanical apparatus of the first embodiment, the pendulum 11 may be made of an elastic body.

Thus, the pendulum 11, the gear mechanism 12, and the generator 13 are less likely to be damaged by an excessive load.

According to the electromechanical apparatus of the first embodiment, the electromechanical apparatus may be further provided with a rectifier circuit that rectifies electric power generated by the generator 13.

Thus, it is possible to supply AC electric power generated by the generator 13, to a DC-powered load device 21.

According to the electromechanical apparatus of the first embodiment, the electromechanical apparatus may be further provided with a power storage circuit that stores energy of electric power rectified by the rectifier circuit.

Thus, it is possible to supply electric power to the load device 21 in real time, or temporarily store electric power and then supply the stored electric power to the load device 21. Therefore, the energy can be utilized at any moment.

According to the electromechanical apparatus of the first embodiment, the rectifier circuit and the power storage circuit may constitute a voltage multiplier rectifier circuit.

Thus, it is possible to increase the output voltage of the power storage circuit 32, and increase the capacity of the power storage circuit 32. In addition, when subsequent circuits include a booster circuit, it is possible to improve the efficiency of the booster circuit by increasing a pre-boost voltage using the voltage doubling rectification.

According to the electromechanical apparatus of the first embodiment, the electromechanical apparatus may be further provided with a load device 21 that operates with electric power generated by the generator 13.

Thus, it is possible to improve usefulness of the load device 21.

According to the electromechanical apparatus of the first embodiment, the load device 21 includes at least one of a lighting device, a rechargeable battery, a sensor, or a communication device.

Thus, it is possible to utilize the electromechanical apparatus 1 and the load device 21 in various applications.

[SECOND EMBODIMENT]

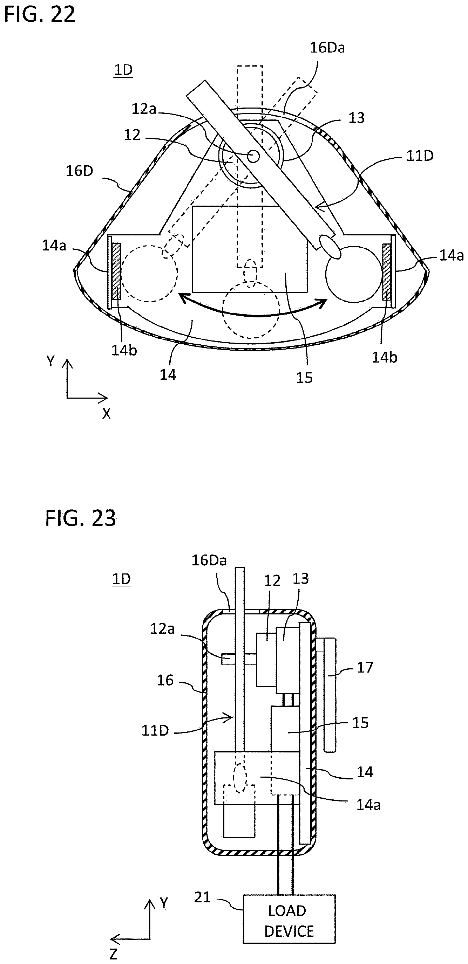

Fig. 22 is a front view illustrating a configuration of an electromechanical apparatus 1D according to a second embodiment. Fig. 23 is a side view illustrating the configuration of the electromechanical apparatus 1D of Fig. 22. The electromechanical apparatus 1D is provided with a pendulum 11D and a housing 16D, instead of the pendulum 11 and the housing 16 of Figs. 1 and 2.

The housing 16D has an opening 16Da in a part thereof (top of Figs. 22 and 23). The pendulum 11D extends upward farther than the pendulum 11 of Figs. 1 and 2, and is partially exposed from the opening 16Da of the housing 16D of the electromechanical apparatus 1D.

The length, position, and shape of the pendulum 11D are determined so that it is possible to easily apply force to the pendulum 11D with fingers of a user, hands, arms, and/or the like. Thus, even when a body of a user is substantially stationary (for example, not walking), the user can easily generate electric power in a manual manner by actively applying force to the part of the pendulum 11D exposed from the housing 16D. The user may slightly pushes the portion of the pendulum 11D exposed from the housing 16D, in accordance with the cycle of swinging of the pendulum 11D. For example, in a case that the load device 21 includes a lighting device, even when a user stops at a traffic signal or the like while walking at night, it is possible to continue to turn on the lighting device for safety, by manually generating electric power. In addition, in a case that the load device 21 includes a charger, it is possible to charge, for example, the mobile phone in an emergency, by manually generating electric power .

According to each embodiment of the present disclosure, even when the actions of a body of a user stop, it is possible to generate sufficiently large electric power to power the load device 21 for several seconds. The electromechanical apparatus 1D of Figs. 22 and 23 can manually generate electric power, even when supply of electric power to the load device 21 stops after the actions of the body of the user stop.

Alternatively, the pendulum 11D may be partially exposed from the soft case 16C as illustrated in Figs. 20 and 21.

[SUMMARY OF SECOND EMBODIMENT]

According to the electromechanical apparatus of the second embodiment, the pendulum 11D may be partially exposed from a housing or a case of the electromechanical apparatus 1D.

Thus, it is possible to easily generate electric power in a manual manner even when the body of the user is substantially stationary.

[THIRD EMBODIMENT]

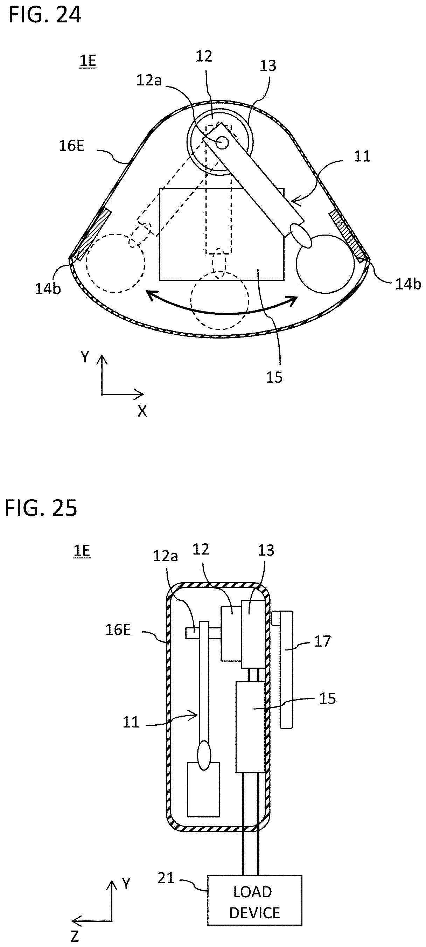

Fig. 24 is a front view illustrating a configuration of an electromechanical apparatus 1E according to a third embodiment. Fig. 25 is a side view illustrating the configuration of the electromechanical apparatus 1E of Fig. 24. The electromechanical apparatus 1E is provided with a housing 16E in which the frame 14 and the housing 16 of Figs. 1 and 2 are integrated with each other, instead of the frame 14 and the housing 16 separate from each other.

The housing 16E is located at a fixed position relative to the gear mechanism 12 and the generator 13. The housing 16E is formed so as to at least partially cover the pendulum 11 and its trajectory when the pendulum 11 swings about an input shaft 12a of a gear mechanism 12 at least within a predetermined angular range. In addition, in the example of Fig. 24, the cushion member 14b is provided on the housing 16E. The housing 16E may also serves as the frame 14 of Figs. 1 and 2 as illustrated in Figs. 24 and 25, as long as the housing 16E covers at least partially the pendulum 11 and its trajectory.

[SUMMARY OF THIRD EMBODIMENT]

According to the electromechanical apparatus of the third embodiment, the frame 14 may be integrated with a housing of the electromechanical apparatus 1E.

Thus, it is possible to reduce the number of components of the electromechanical apparatus, and simplify the configuration of the electromechanical apparatus than that of the first embodiment.

[FOURTH EMBODIMENT]

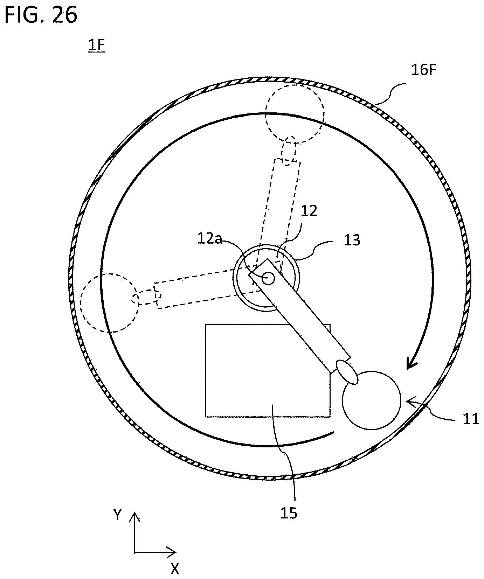

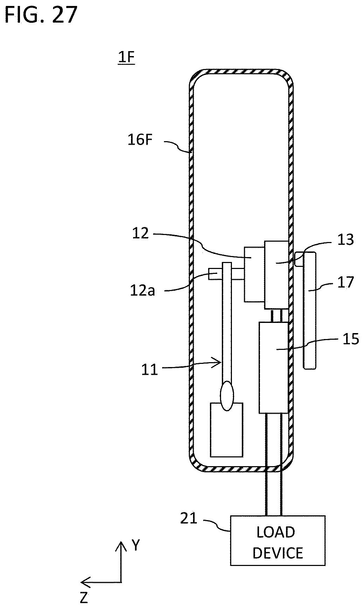

Fig. 26 is a front view illustrating a configuration of an electromechanical apparatus IF according to a fourth embodiment. Fig. 27 is a side view illustrating the configuration of the electromechanical apparatus IF of Fig. 26. The electromechanical apparatus IF is provided with a housing 16F, instead of the housing 16E illustrated in Figs. 24 and 25.

The housing 16F is formed so as to cover the pendulum 11 and its trajectory when the pendulum 11 rotates 360 degrees around the input shaft 12a of the gear mechanism 12. According to the electromechanical apparatus IF of Figs. 26 and 27, the pendulum 11 may swing about the input shaft 12a of the gear mechanism 12 within a predetermined angular range, or may rotate 360 degrees about the input shaft 12a of the gear mechanism 12. Thus, it is possible to generate electric power through the continuous rotation of the pendulum 11 in the same direction during rough actions of a user, such as running, of the user.

Figs. 26 and 27 illustrate a case where the frame is integrated with the housing 16F. In an electromechanical apparatus provided with both a frame and a housing as illustrated in Figs. 1 and 2, the frame and the housing may be formed so as to cover the pendulum 11 and its trajectory when the pendulum 11 rotates 360 degrees about the input shaft 12a of the gear mechanism 12.

[SUMMARY OF FOURTH EMBODIMENT]

According to the electromechanical apparatus of the fourth embodiment, the frame or housing may be formed so as to cover the pendulum 11 and the trajectory of the pendulum 11 when the pendulum 11 rotates 360 degrees about the input shaft 12a of the gear mechanism 12.

Thus, it is possible to generate electric power from the swinging of the pendulum, and from the rotation of the pendulum.

[OTHER MODIFIED EXAMPLES]

According to each embodiment of the present disclosure, we described a case where the pendulum 11 and the like swings about the input shaft 12a of the gear mechanism 12, that is, around one shaft, at least within a predetermined angular range. Since a person move with their feet, the person's walking is a three-dimensional movement including vertical movement due to the conditions of the walking path, the habit of walking, or the like. Therefore, the electromechanical apparatus may be configured such that a pendulum swings around two or three axes orthogonal to or intersecting each other at least within a predetermined angular range, so that one generator generates electric power in response to the swings of the pendulum. In addition, the electromechanical apparatus may be also provided with two or three generators having respective rotating shafts arranged along two or three axes orthogonal to or intersecting each other. The output electric power of the plurality of generators may be stored in a common power storage circuit, or may be stored in different power storage circuits. Thus, it is possible to efficiently utilize the two- or three-dimensional inertial force, centrifugal force, gravity, and other acting forces, that are spatially generated by the movement of the movable object, and increase the generated electric energy.

According to each embodiment of the present disclosure, we described the case where the generator including the stator and the rotor is rotated forward and reverse according to the swinging of the pendulum. Instead of such a generator, a linear reciprocating generator may be used. The linear reciprocating generator may be, for example, a linear motor. In this case, the electromechanical apparatus is provided with, instead of the pendulum, any reciprocating mechanism that drives the linear reciprocating generator in response to the shaking of the whole of the electromechanical apparatus. The linear reciprocating generator generates positive or negative voltage at the output terminals according to the operation of the reciprocating mechanism.

When the output voltage of the generator 13 is sufficiently high, the gear mechanism 12 may be omitted, or the gear mechanism 12 may be configured to transmit the rotation of the input shaft 12a to the generator 13 at a predetermined decreasing gear ratio. In addition, the input shaft 12a of the gear mechanism 12 and the rotating shaft of the generator 13 may or may not be coaxial. In addition, the spur gear train and a flat generator may be arranged in parallel.

Although the case where the rectifier circuit 31 and the power storage circuit 32 perform voltage doubling rectification has been described with reference to Fig. 3, the rectifier circuit 31 may perform half-wave rectification, full wave rectification, or other rectification.

INDUSTRIAL APPLICABILITY

According to the present disclosure, there is provided an electromechanical apparatus that is attached to a movable object, and converts the mechanical energy of the movements or actions of the movable object into electrical energy. According to the present disclosure, an electromechanical apparatus is provided, capable of continuously and unconsciously extracting relatively large electric power from daily activities of a user.

According to the present disclosure, it is possible to determine the time, time length, and type of acceleration and deceleration of a movable object, and therefore, it is possible to detect the behavior of a person or an object.

REFERENCE SIGNS LIST

1, 1A to IF: ELECTROMECHANICAL APPARATUS

11, 11B: PENDULUM

11a: ARM

11b: BOB

11c: CONNECTING MEMBER

12: GEAR MECHANISM

12a: INPUT SHAFT

13: GENERATOR

14: FRAME

14a: STOPPER

14b: CUSHION MEMBER

15: POWER CONVERTER CIRCUIT

16, 16D, 16E, 16F: HOUSING

16C: CASE

16Da: OPENING

17: FASTENER

21: LOAD DEVICE

31: RECTIFIER CIRCUIT

32: POWER STORAGE CIRCUIT

33: CONTROL CIRCUIT

41: BELT

42: POCKET

43: BAG

51: SERVER APPARATUS

**Claims**

1. An electromechanical apparatus comprising:

   a gear mechanism that has an input shaft and transmits rotation of the input shaft;
   a generator that has output terminals and generates electric power at the output terminals in response to rotation transmitted by the gear mechanism; and

a pendulum that is connected to the input shaft of the gear mechanism,

wherein the electromechanical apparatus further comprises a frame located at a fixed position relative to the gear mechanism and the generator,

wherein the frame is formed so as to at least partially cover the pendulum and a trajectory of the pendulum when the pendulum swings about the input shaft of the gear mechanism at least within a predetermined angular range, and

wherein the pendulum swings about the input shaft of the gear mechanism in response to shaking of a whole of the electromechanical apparatus, and the generator generates positive and negative voltages at the output terminals in response to swinging of the pendulum.

2. The electromechanical apparatus as claimed in claim 1,

wherein a weight of the pendulum and a length from the input shaft of the gear mechanism to a center of gravity of the pendulum are set such that, when the output terminals of the generator are electrically open, at least total four or more positive and negative peaks appear in an output voltage of the generator after the pendulum is released at a position of 90 degrees with respect to a plumb line, and such that a second time length associated with mechanical loss and electrical loss occurring when the output terminals of the generator are connected to a load device is shorter than a first time length associated with mechanical loss occurring when the output terminals of the generator are electrically open,

wherein the first time length indicates, in a case that the output terminals of the generator are electrically open, a time length from when the output voltage of the generator starts at zero voltage upon the pendulum is released at the position of 90 degrees with respect to the plumb line, to when the output voltage of the generator reaches zero voltage after reaching a first positive or negative peak and a second negative or positive peak, and

wherein the second time length indicates, in a case that the output terminals of the generator are connected to the load device, a time length from when the output voltage of the generator starts at zero voltage upon the pendulum is released at the position of 90 degrees with respect to the plumb line, to when the output voltage of the generator reaches zero voltage again after reaching a first positive or negative peak.

3. The electromechanical apparatus as claimed in claim 1 or 2,

wherein the frame is formed so as to be in contact with the pendulum to limit the angular range in which the pendulum swings about the input shaft of the gear mechanism.

4. The electromechanical apparatus as claimed in claim 3, further comprising a cushion member provided on at least one of the pendulum and the frame, at a position where the pendulum and the frame are contact with each other.

5. The electromechanical apparatus as claimed in claim 1 or 2,

wherein the frame is formed so as to cover the pendulum and the trajectory of the pendulum when the pendulum rotates 360 degrees about the input shaft of the gear mechanism.

6. The electromechanical apparatus as claimed in any one of claims 1 to 5,

wherein the frame is integrated with a housing of the electromechanical apparatus.

7. The electromechanical apparatus as claimed in any one of claims 1 to 6, further comprising a fastener for attachment to a movable object.

8. The electromechanical apparatus as claimed in any one of claims 1 to 7,

wherein the pendulum comprises:

an arm that is connected to the input shaft of the gear mechanism;
a bob; and
a connecting member that connects the arm and the bob so as to be movable to each other.

9. The electromechanical apparatus as claimed in any one of claims 1 to 7,

wherein the pendulum is made of an elastic body.

10. The electromechanical apparatus as claimed in any one of claims 1 to 9,

wherein the pendulum is partially exposed from a housing or a case of the electromechanical apparatus.

11. The electromechanical apparatus as claimed in any one of claims 1 to 10, further comprising a rectifier circuit that rectifies electric power generated by the generator.

12. The electromechanical apparatus as claimed in claim 11, further comprising a power storage circuit that stores energy of electric power rectified by the rectifier circuit.

13. The electromechanical apparatus as claimed in claim 12,
wherein the rectifier circuit and the power storage circuit constitute a voltage multiplier rectifier circuit.

14. The electromechanical apparatus as claimed in any one of claims 1 to 13, further comprising a load device that operates with electric power generated by the generator.

15. The electromechanical apparatus as claimed in claim 14,
wherein the load device includes at least one of a lighting device, a rechargeable battery, a sensor, or a communication device.

FIG. 1

FIG. 2

LOAD
DEVICE

FIG. 3

FIG. 4

FIG. 5

FIG. 6

VOLTAGE [V]

LOAD VALUE: 100Ω

4.5

0

TIME [ms]

T2 = 800

FIG. 7

VOLTAGE [V]

LOAD VALUE: 200Ω

8

0

TIME [ms]

T2 = 380

FIG. 8

VOLTAGE [V]

LOAD VALUE: 320Ω

10.5

0

TIME [ms]

T2 = 320

FIG. 9

VOLTAGE [V]

LOAD VALUE: 490Ω

12

0

TIME [ms]

-3

280

T2 = 300

FIG. 10

FIG. 11

FIG. 12

FIG. 13

# FIG. 14

FIG. 15

FIG. 16

FIG. 17

FIG. 18

FIG. 19

FIG. 20

FIG. 21

## FIG. 22

## FIG. 23

## FIG. 24

## FIG. 25

LOAD
DEVICE

FIG. 26

FIG. 27

# EP 3 890 166 A1

## INTERNATIONAL SEARCH REPORT

International application No.

PCT/JP2019/039890

### A. CLASSIFICATION OF SUBJECT MATTER
Int. Cl. H02K7/116(2006.01)i

According to International Patent Classification (IPC) or to both national classification and IPC

### B. FIELDS SEARCHED

Minimum documentation searched (classification system followed by classification symbols)
Int. Cl. H02K7/116

Documentation searched other than minimum documentation to the extent that such documents are included in the fields searched
```
Published examined utility model applications of Japan      1922-1996
Published unexamined utility model applications of Japan    1971-2019
Registered utility model specifications of Japan            1996-2019
Published registered utility model applications of Japan    1994-2019
```

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2002-19550 A (DENSO CORP.) 23 January 2002, | 1, 3-15 |
| A | paragraphs [0016], [0017], fig. 2 (Family: none) | 2 |
| Y | JP 2018-74639 A (STAR MFG CO.) 10 May 2018, paragraphs [0025]-[0032], fig. 1, 2 (Family: none) | 1, 3-15 |
| Y | JP 2012-79667 A (CERATEC ENGINEERING CORP.) 19 April 2012, paragraphs [0023], [0024], fig. 1, 2 (Family: none) | 3-4, 6-15 |
| Y | JP 2015-226461 A (HSU, Yi-Ping) 14 December 2015, paragraphs [0024], [0025], fig. 1, 2 & US 2015/0340932 A1, paragraphs [0018]-[0022], fig. 1, 2 & EP 2949928 A1 & TW 201439436 A & CA 2890839 A1 & CN 105134515 A & KR 10-2015-0136026 A | 5-15 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 09.12.2019 | 17.12.2019 |

| Name and mailing address of the ISA/<br>Japan Patent Office<br>3-4-3, Kasumigaseki, Chiyoda-ku,<br>Tokyo 100-8915, Japan | Authorized officer |
| | Telephone No. |

Form PCT/ISA/210 (second sheet) (January 2015)

34

**INTERNATIONAL SEARCH REPORT**

| International application No. |
|---|
| PCT/JP2019/039890 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2010-246310 A (KUDO, Satoshi) 28 October 2010, paragraph [0022], fig. 4, 5 (Family: none) | 7-15 |
| Y | WO 2017/208467 A1 (TRI-FORCE MANAGEMENT CORPORATION) 07 December 2017, description, page 48, line 25 to page 56, line 26, fig. 24, 25, 27, 28 & US 2018/0262130 A1, paragraphs [0298]-[0335], fig. 24, 25, 27, 28 & CN 108028614 A | 8-15 |
| Y | JP 2000-266870 A (RHYTHM WATCH CO., LTD.) 29 September 2000, paragraph [0009], fig. 1 (Family: none) | 10-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6083621 B